# EUROPEAN PATENT SPECIFICATION

(11) **EP 2 377 685 B1**
(45) Date of publication and mention of the grant of the patent: **28.03.2018**
(21) Application number: 09838453.0
(22) Date of filing: 22.12.2009
(51) Int. Cl.: B32B 27/36, B32B 27/30, B32B 27/08

(54) **INTERIOR FILM HAVING A MIRROR-FINISHED SURFACE PROPERTY AND MANUFACTURING METHOD THEREOF**
INNENFOLIE MIT SPIEGELFLÄCHE UND HERSTELLUNGSVERFAHREN DAFÜR
PELLICULE INTÉRIEURE PRÉSENTANT DES PROPRIÉTÉS DE SURFACE À FINITION RÉFLÉCHISSANTE ET SA MÉTHODE DE FABRICATION

(30) Priority: 14.01.2009 KR 20090002841
(43) Date of publication of application: 19.10.2011
(73) Proprietor: LG Hausys, Ltd., Seoul 150-721 (KR)
(72) Inventor: PARK, Ji-Yong, Ulsan 680-751 (KR); KIM, Myung-Jin, Ulsan 680-793 (KR); KIM, Bong-Hui, Ulsan 680-012 (KR); HAN, Sang-Hui, Ulsan 680-012 (KR)
(74) Representative: Plougmann Vingtoft a/s
(86) International application number: PCT/KR2009/007691
(87) International publication number: WO 2010/082732

(56) References cited:
- WO-A2-2005/051644
- WO-A2-2007/149955
- JP-A- 8 006 160
- KR-B1- 100 339 139
- US-A- 6 030 671
- US-B1- 6 644 552
- US-B1- 6 644 552

## Description

### [Technical Field]

The present invention relates to an interior film and a method of manufacturing the same. More particularly, the present invention relates to an interior film which includes a modified polyvinylchloride (PVC) sheet layer and a polyethylene terephthalate (PET) layer stacked thereon, thereby providing a mirror effect, and a method of manufacturing the same.

### [Background Art]

Interior films are widely used as wall-finishing materials and generally have a wood pattern. Currently, market demand is present for interior films providing a mirror effect. However, technical limitations in the art make it difficult to manufacture a mirror effect interior film or provide a significantly low mirror effect to the interior film.

In the related art, an interior film is prepared by coating an adhesive onto the back of a PVC sheet so as to form an adhesive layer and attaching a release film to the adhesive layer. However, since gloss of a mirror surface is significantly affected by slight irregularities or flatness of the sheet surface, it is difficult to manufacture a mirror effect interior film.

Korean Unexamined Patent Publication No. 2008-71462 discloses an interior wallpaper film which includes a surface protecting layer, a printed layer, a PVC layer, a nonwoven fabric layer, an adhesive layer, and a release film sequentially stacked from the top thereof.

Japanese Unexamined Patent Publication No. 1999-131396 discloses a matted flexible film which includes a printed layer, a foaming paint layer, a size-stabilizing layer, an adhesive layer, and a release film sequentially stacked from the top thereof.

Korean Registered Utility Model No. 434504 discloses an interior decorative film which includes a decorative fabric layer, a PVC film layer, a nonwoven fabric layer, an adhesive layer, and a release film sequentially stacked from the top thereof.

Korean Unexamined Patent Publication No. 2005-27581 discloses a decorative film which includes a surface-treated layer, a transparent layer, a printed layer, and a release film sequentially stacked from the top thereof.

However, the films of the aforementioned publications do not disclose a mirror surface-treating layer, and since the release film is attached to the back of the film, the mirror effect cannot be obtained. Furthermore, there is no mention of hardness regulation of the PVC layer.

### [Disclosure]

### [Technical Problem]

The present invention is directed to solving the problems of the related art in that an existing interior film attached to a target exhibits insignificant mirror effects due to irregularity of the target and a release film, and an aspect of the invention is to provide an interior film capable of maintaining a mirror effect even after attachment to a target, and a method of manufacturing the same.

### [Technical Solution]

In accordance with one aspect of the invention, an interior film includes a protective layer, a mirror surface-treating layer, a polyvinylchloride (PVC) sheet layer, an adhesive layer, and a polyethyleneterephthalate (PET) layer which are sequentially stacked from the top thereof.

The present invention solves the problems of the related art by regulating hardness of the PVC sheet layer and maintaining flatness of the sheet layer using the PET layer instead of a release film.

In maintaining a mirror surface of an interior film, the hardness of the PVC sheet layer is an important factor. The PVC sheet layer is formed by calendaring. If the sheet layer is hard, it is difficult to attach the interior film to a curved surface of a target, and if the sheet layer is soft, unevenness of the target, for example, a wall face, is exposed through the interior film attached to the target, making it difficult to maintain mirror surfaces of the interior film. In order to solve this problem, the composition of the PVC sheet layer is adjusted to provide proper hardness. As determined through experimentation, when 5 to 15 parts by weight of a plasticizer is added to 100 parts by weight of PVC in preparation of the PVC sheet layer, the PVC sheet layer has a proper hardness in the range of 60 to 80 in Shore D hardness. Advantageously, the PVC sheet layer has a thickness of 0.1 to 0.3 mm to maintain a mirror effect of the interior film.

Although the interior film in the art has a problem in that a mirror effect of the interior film is damaged by unevenness of the release film attached to the adhesive layer, the present invention solves such a problem using a PET layer that has good flatness and a releasable feature. In this invention, the PET layer may have a thickness of 30 to 100 *µ*m. If the thickness of the PET layer is less than 30 *µ*m, it is difficult to maintain flatness of the PET layer, and if the thickness exceeds 100*µ*m, it is difficult to perform an adhesive coating process.

The PVC sheet layer has a gloss-treated mirror surface having gloss of 70 to 100%, preferably 90% or more, and a mirror surface-treating layer is formed on the mirror surface of the PVC sheet layer by coating a thermosetting or UV-curable resin to the mirror surface of the PVC sheet layer.

In accordance with another aspect of the invention, a method of manufacturing an interior film includes: preparing a PVC sheet layer; forming a mirror surface-treating layer on the PVC sheet layer by forming a mirror surface on the PVC sheet layer using a gloss-treated embossing roller, and applying and curing a thermosetting or UV-curable resin on the mirror surface; stacking a protective layer on the mirror surface-treating layer; forming an adhesive layer on a PET layer by applying and drying an adhesive on the PET layer; and combining the PVC sheet layer having the mirror surface-treating layer and the protective layer with the PET layer having the adhesive layer, wherein the PVC sheet layer is prepared to have a Shore D hardness of 60 to 80 by adding 5 to 15 parts by weight of a plasticizer to 100 parts by weight of PVC.

### [Advantageous Effects]

According to exemplary embodiments, an interior film includes a PVC sheet layer having predetermined hardness and uses a PET layer instead of a release film, thereby maintaining mirror effects without any problem in attachment of the interior film to a target.

### [Description of Drawing]

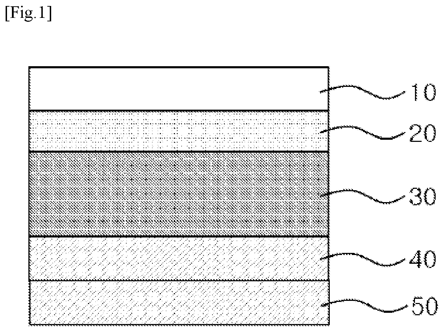

Fig. 1 is a sectional view of an interior film according to an exemplary embodiment of the present invention.

### [Best Mode]

Exemplary embodiments of the invention will now be described with reference to the accompanying drawings.

Fig. 1 is a sectional view of an interior film according to an exemplary embodiment, which includes a protective layer 10, a mirror surface-treating layer 20, a polyvinylchloride (PVC) sheet layer 30, an adhesive layer 40, and a polyethyleneterephthalate (PET) layer 50 sequentially stacked from the top thereof.

The protective layer 10 serves to protect the mirror surface-treating layer 20 and may be formed of, for example, a polyethylene (PE) film.

The mirror surface-treating layer 20 protects a mirror surface of the PVC sheet layer 30 and imparts scratch resistance to the interior film. The mirror surface-treating layer may be formed of a thermosetting or UV-curable resin and have a thickness of 5 to 20µm.

The PVC sheet layer 30 has a mirror surface with gloss of 70 to 100% obtained through gloss treatment and also has a predetermined hardness to maintain mirror effects of the mirror surface. The hardness of the PVC sheet layer is in the range of 60 to 80 in Shore D hardness, as obtained by adding 5 to 15 parts by weight of a plasticizer to 100 parts by weight of PVC. The PVC sheet layer 30 may be a monochromic layer and may further include a printed layer thereon. The PVC sheet layer 30 may have a thickness of 0.1 to 0.3 mm. Examples of the plasticizer may include diisononyl phthalate (DINP) and diisodecyl phthalate (DIDP), without being limited thereto.

The adhesive layer 40 may be formed of acryl adhesives.

The PET layer 50 imparts flatness to the interior film to maintain the mirror effects of the interior film. The PET layer may be formed of a PET resin and have a
thickness of 30 to 100µm.

Next, a method of manufacturing an interior film according to an exemplary embodiment of the invention will be described.

First, a PVC sheet layer 30 is prepared by a calendaring process such that the hardness of the PVC sheet layer is in the range of 60 to 80 in Shore D hardness by adding 5 to 15 parts by weight of a plasticizer to 100 parts by weight of PVC.

Then, a mirror surface is formed on the PVC sheet layer 30 using a gloss-treated embossing roller. The gloss-treated embossing roller has a smooth, glossy, chromium-coated surface. The mirror surface has gloss of 70 to 100%, preferably 90% or more. For reference, surface gloss can be determined by measurement of scattering rate upon light exposure of a specimen according to ASTM D 2457.

Then, a mirror surface-treating layer 20 is formed on the mirror surface of the PVC sheet layer 30 by applying a thermosetting or UV-curable resin to the mirror surface of the PVC sheet layer, followed by thermally or UV-curing the resin on the mirror surface.

Then, a protective layer 10 such as a PE film is stacked on the mirror surface-treating layer 20.

Then, an adhesive layer 40 is formed on a PET layer 50 by applying and drying an adhesive on the PET layer. Here, the adhesive is applied in an amount of 100 to 300 g/m² and passes through a drying oven to volatilize solvent components therefrom. The drying oven is maintained at a temperature of 50 to 180°C.

Finally, the PVC sheet layer 30 having the mirror surface-treating layer 20 and the protective layer 10 is combined with the PET layer 50 having the adhesive layer 40 using a lamination roller.

### Example 1

As shown in Fig. 1, an interior film including a protective layer 10, a mirror surface-treating layer 20, a PVC sheet layer 30, an adhesive layer 40, and a PET layer 50 in order from the top was manufactured.

First, a PVC sheet layer 30 having a hardness of 70 in Shore D hardness and a thickness of 0.2 mm was prepared through a calendaring process by adding 10 parts by weight of DINP as a plasticizer to 100 parts by weight of PVC.

Then, a mirror surface having gloss of 90% was formed on the PVC sheet layer 30 using a chromium-coated embossing roller.

Then, a 10 µm thick mirror surface-treating layer 20 was formed on the PVC sheet layer 30 by applying a thermosetting resin to th0e mirror surface of the PVC sheet layer 30 and thermally curing the thermosetting resin thereon.

Then, a PE film as a protective layer 10 was stacked on the mirror surface-treating layer 20.

Then, an adhesive layer 40 was formed on a PET layer 50 by applying an acryl adhesive at 200 g/m² to a 60 µm thick PET layer 50 and volatilizing a solvent
component of the adhesive in a drying oven at a temperature of 100°C.

Finally, the PVC sheet layer was combined with the acryl adhesive coated on the PET layer 50 using lamination rollers.

### Comparative Example 1

An interior film including a release film instead of the PET layer 50 was manufactured by the same method as in Example 1.

### Comparative Example 2

An interior film was manufactured in a manner similar to as in Example 1, except that a plasticizer was added in an amount of 20 parts by weight to 100 parts by weight of PVC to form the PVC sheet layer.

### Comparative Example 3

An interior film was manufactured in a manner similar to as in Example 1, except that a plasticizer was added in an amount of 3 parts by weight to 100 parts by weight of PVC to form the PVC sheet layer.

### Testing

Testing of gloss of a mirror surface and attachment performance on a curved surface of a target was performed on the interior films of Example 1 and Comparative Examples 1 to 3, in which the PVC sheet layers had different compositions and either the PET layer or the release film was used. The gloss of the mirror surface was checked with the naked eye and the attachment performance was checked according to whether an edge of the interior film was attached to the curved surface of the target three days after attachment thereto.

**Table 1**

| | Plasticizer added to PVC sheet layer (with respect to 100 parts by weight of PVC) | Bottom layer | Gloss | Attachment performance on curved surface |
|---|---|---|---|---|
| Example 1 | 10 parts | PET layer | O | O |
| Comparative Example 1 | 10 parts | Release film | X | O |
| Comparative Example 2 | 20 parts | PET layer | X | O |
| Comparative Example 3 | 3 parts | PET layer | O | X |

As can be seen in Table 1, only Example 1 can secure both gloss and attachment performance on a curved surface of a target. This result reflects the fact that both specified hardness of the PVC sheet layer and flatness of the PET layer are important factors in providing and maintaining the mirror effects of the interior film.

Although some embodiments have been described herein, it should be understood by those skilled in the art that these embodiments are given by way of illustration only, and that various modifications, variations, and alterations can be made without departing from the spirit and scope of the invention. Therefore, the scope of the invention should be limited only by the accompanying claims and equivalents thereof.

## Claims

1. An interior film comprising:
a protective layer (10); a mirror surface treating layer (20) formed on the mirror surface of the PVC sheet layer;
a polyvinylchloride (PVC) sheet layer (30) having a glossy surface that provides a mirror effect;
an adhesive layer (40); and
a polyethyleneterephthalate (PET) layer (50),
which are stacked in the above sequence, wherein the PVC sheet layer (30) has a gloss-treated mirror surface having gloss of 70 to 100 %.

2. The interior film of claim 1, wherein the PVC sheet layer (30) has a Shore D hardness of 60 to 80.

3. The interior film of claim 1 or 2, wherein the PVC sheet layer (30) has a thickness of 0.1 to 0.3 mm.

4. The interior film of claim 1 or 2, wherein the PET layer (50) has a thickness of 30 to 100 *µ*m.

5. The interior film of claim 1, wherein the mirror surface treating layer (20) is formed by applying a thermosetting or UV-curable resin to the mirror surface of the PVC sheet layer (30).

6. A method of manufacturing an interior film, comprising:
preparing a polyvinylchloride (PVC) sheet layer (30) by using a gloss-treated embossing roller to form a glossy surface that provides a mirror effect on the PVC sheet layer (30);
forming a mirror surface treating layer (20) on the PVC sheet layer (30) by applying and curing a thermosetting or UV-curable resin on the glossy surface;
stacking a protective layer (10) on the mirror surface treating layer (20);
forming an adhesive layer (40) on a polyethyleneterephthalate (PET) layer (50) by applying and drying an adhesive on the PET layer (50); and
combining the PVC sheet layer (30) having the mirror surface treating layer (20) and the protective layer (10) with the PET layer (50) having the adhesive layer (40).

7. The method of claim 6, wherein the PVC sheet layer (30) is prepared to have a Shore D hardness of 60 to 80 by adding 5 to 15 parts by weight of a plasticizer to 100 parts by weight of PVC.

## Patentansprüche

1. Innenfilm, umfassend:
eine Schutzschicht (10);
eine Spiegeloberflächenbehandlungsschicht (20), die auf der Spiegeloberfläche der PVC-Folienschicht gebildet ist;
eine Polyvinylchlorid- (PVC-)Folienschicht (30) mit einer glänzenden Oberfläche, die einen Spiegeleffekt bereitstellt;
eine Klebemittelschicht (40); und
eine Polyethylenterephthalat- (PET-)Schicht (50),
die in der vorstehenden Reihenfolge aufeinandergestapelt sind, wobei die PVC-Folienschicht (30) eine glanzbehandelte Spiegeloberfläche mit einem Glanz von 70 bis 100 % aufweist.

2. Innenfilm nach Anspruch 1, wobei die PVC-Folienschicht (30) eine Shore-D-Härte von 60 bis 80 aufweist.

3. Innenfilm nach Anspruch 1 oder 2, wobei die PVC-Folienschicht (30) eine Dicke von 0,1 bis 0,3 mm aufweist.

4. Innenfilm nach Anspruch 1 oder 2, wobei die PVC-Folienschicht (50) eine Dicke von 30 bis 100 µm aufweist.

5. Innenfilm nach Anspruch 1, wobei die Spiegeloberflächenbehandlungsschicht (20) durch Aufbringen eines wärmehärtbaren oder UV-härtbaren Harzes auf die Spiegeloberfläche der PVC-Folienschicht (30) gebildet ist.

6. Verfahren zum Herstellen eines Innenfilms, umfassend:
Herstellen einer Polyvinylchlorid- (PVC-)Folienschicht (30) durch Verwenden einer glanzbehandelten Prägewalze, um eine glänzende Oberfläche zu bilden, die einen Spiegeleffekt an der PVC-Folienschicht (30) bereitstellt;
Bilden einer Spiegeloberflächenbehandlungsschicht (20) auf der PVC-Folienschicht (30) durch Aufbringen und Aushärten eines wärmehärtbaren oder UV-härtbaren Harzes auf der glänzenden Oberfläche;
Stapeln einer Schutzschicht (10) auf der Spiegeloberflächenbehandlungsschicht (20);
Bilden einer Klebemittelschicht (40) auf einer Polyethylenterephthalat-(PET-)Schicht (50) durch Aufbringen und Trocknen eines Klebemittels auf der PET-Schicht (50); und
Kombinieren der PVC-Folienschicht (30), die über die Spiegeloberflächenbehandlungsschicht (20) und die Schutzschicht (10) verfügt, mit der PET-Schicht (50), die über die Klebemittelschicht (40) verfügt.

7. Verfahren nach Anspruch 6, wobei die PVC-Folienschicht (30) dazu hergestellt ist, dass sie eine Shore-D-Härte von 60 bis 80 aufweist, indem 5 bis 15 Gewichtsteile eines Weichmachers zu 100 Gewichtsteilen von PVC hinzugefügt werden.

## Revendications

1. Pellicule intérieure comprenant :
une couche protectrice (10) ;
une couche de traitement de surface réfléchissante (20) formée sur la surface réfléchissante de la couche de feuille de PVC ;
une couche de feuille de polychlorure de vinyle (PVC) (30) possédant une surface brillante qui confère un effet réfléchissant ;
une couche adhésive (40) ; et
une couche de polytéréphtalate d'éthylène (PET) (50),
empilées dans l'ordre ci-dessus, ladite couche de feuille de PVC (30) possédant une surface réfléchissante traitée en brillance possédant un brillant allant de 70 à 100 %.

2. Pellicule intérieure selon la revendication 1, ladite couche de feuille de PVC (30) possédant une dureté Shore D allant de 60 à 80.

3. Pellicule intérieure selon la revendication 1 ou 2, ladite couche de feuille de PVC (30) possédant une épaisseur allant de 0,1 à 0,3 mm.

4. Pellicule intérieure selon la revendication 1 ou 2, ladite couche de PET (50) possédant une épaisseur de 30 à 100 *µ*m.

5. Pellicule intérieure selon la revendication 1, ladite couche de traitement de surface réfléchissante (20) étant formée en appliquant une résine thermodurcissable ou durcissable aux UV à la surface réfléchissante de la couche de feuille de PVC (30).

6. Procédé de fabrication d'une pellicule intérieure, comprenant :
la préparation d'une couche de feuille de polychlorure de vinyle (PVC) (30) à l'aide d'un rouleau de gaufrage traité en brillance pour former une surface brillante qui donne un effet réfléchissant sur la couche de feuille de PVC (30) ;
la formation d'une couche de traitement de surface réfléchissante (20) sur la couche de feuille de PVC (30) en appliquant et en durcissant une résine thermodurcissable ou durcissable aux UV sur la surface brillante ;
l'empilement d'une couche protectrice (10) sur la couche de traitement de surface réfléchissante (20) ;
la formation d'une couche adhésive (40) sur une couche de polytéréphtalate d'éthylène (PET) (50) en appliquant et en séchant un adhésif sur la couche de PET (50) ; et
la combinaison de la couche de feuille de PVC (30) possédant la couche de traitement de surface réfléchissante (20) et la couche protectrice (10) avec la couche de PET (50) comportant la couche adhésive (40).

7. Procédé selon la revendication 6, ladite couche de feuille de PVC (30) étant préparée pour posséder une dureté Shore D allant de 60 à 80 en ajoutant 5 à 15 parties en poids d'un plastifiant pour 100 parties en poids de PVC.
